(19) Europäisches Patentamt / European Patent Office / Office européen des brevets

(11) **EP 3 385 235 B1**

(12) **EUROPEAN PATENT SPECIFICATION**

(45) Date of publication and mention
of the grant of the patent:
**06.07.2022   Bulletin 2022/27**

(21) Application number: **16870802.2**

(22) Date of filing: **02.12.2016**

(51) International Patent Classification (IPC):
**C03C 17/245** *(2006.01)*    **C03C 17/32** *(2006.01)*
**C03C 17/34** *(2006.01)*    **C03C 27/12** *(2006.01)*
**G02B 5/22** *(2006.01)*    **C03C 17/00** *(2006.01)*

(52) Cooperative Patent Classification (CPC):
**C03C 17/3417; C03C 17/007; G02B 5/22;**
C03C 2217/445; C03C 2217/485; C03C 2217/734;
C03C 2217/74

(86) International application number:
**PCT/JP2016/085846**

(87) International publication number:
**WO 2017/094867 (08.06.2017 Gazette 2017/23)**

(54) **WAVELENGTH-SELECTIVE TRANSPARENT GLASS PRODUCT**

**WELLENLÄNGENSELEKTIVES TRANSPARENTE GLASPRODUKT**

**PRODUIT EN VERRE TRANSPARENT SÉLECTIF EN LONGUEUR D'ONDE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **02.12.2015   JP 2015235807**

(43) Date of publication of application:
**10.10.2018   Bulletin 2018/41**

(73) Proprietors:
• **AGC Inc.**
  **Tokyo 100-8405 (JP)**
• **Tsubota Laboratory, Inc.**
  **Tokyo 160-0016 (JP)**

(72) Inventors:
• **HIRAKOSO Hideyuki**
  **Tokyo 100-8405 (JP)**
• **MASHIMO Takahiro**
  **Tokyo 100-8405 (JP)**
• **NAGAI Kensuke**
  **Tokyo 100-8405 (JP)**
• **TSUBOTA Kazuo**
  **Tokyo 160-0016 (JP)**
• **KURIHARA Toshihide**
  **Tokyo 160-0016 (JP)**
• **TORII Hidemasa**
  **Tokyo 160-0016 (JP)**

(74) Representative: **Müller-Boré & Partner
Patentanwälte PartG mbB
Friedenheimer Brücke 21
80639 München (DE)**

(56) References cited:
JP-A- H0 234 541        JP-A- H03 265 545
JP-A- H04 193 744       JP-A- 2000 185 950
JP-A- 2000 211 943      JP-A- 2002 003 243
US-A1- 2014 226 208     US-A1- 2014 227 500

Remarks:
The file contains technical information submitted after the application was filed and not included in this specification

**Description**

Technical Field

The present invention relates to a wavelength-selective transmissive glass article that transmits light in a specific wavelength region.

Background Art

A commonly used window glass transmits ultraviolet radiation to some extent. It is known that skin is therefore gradually sunburned in a room exposed to direct sunlight.
To cope with this problem, an ultraviolet absorbing glass containing an ion that absorbs ultraviolet or a glass including a film containing an ultraviolet absorber is used for a window of, for example, an automobile that is especially exposed to sun.
Patent Document 1 describes a glass sheet with an ultraviolet-blocking layer, in which an ultraviolet-blocking layer is provided on a glass having a light transmittance at a wavelength of 400 nm of 61% so that the light transmittance at a wavelength of 400 nm is reduced to 3% or less.
The documents US 2014/226208 A1 and US 2014/227500 A1 describe glass articles coated with an alternating layers of NbOx and SiOx. The documents JP H02 34541 A and JP 2002 003243 A describe glass articles coated with an organic coating comprising an organic matrix and another organic compound.
Ultraviolet causes skin sunburn, ocular inflammation, polymer material degradation or the like and is considered to be harmful, but light in a specific wavelength region is supposed to be effective in preventing myopia. However, conventional ultraviolet absorbing glasses are designed to absorb the whole of ultraviolet.

Prior Art Literature

Patent Document

Patent Document 1: JP-A-2009-187882

Summary of the Invention

Technical Problems

An object of the present invention is to provide a wavelength-selective transmissive glass article which transmits light in a specific wavelength region effective for avoiding myopia and exhibits low light transmittance at a wavelength shorter than the specific wavelength region.

Solution to Problems

The present invention provides a wavelength-selective transmissive glass article as defined in independent claim 1. which has light transmittance Tmore than 315 nm and 400 nm or less at a wavelength of more than 315 nm and 400 nm or less, represented by the following formula, of 1% or more and light transmittance T315 nm or less at a wavelength of 315 nm or less, represented by the following formula, of 60% or less.

[Math. 1]

$$T_{\text{more than }315\,\text{nm and }400\,\text{nm or less}} = (\sum_{k=\text{more than }315}^{400} A_k \times T_k) / (\sum_{k=\text{more than }315}^{400} A_k)$$

[Math. 2]

$$T_{315\,\text{nm or less}} = (\sum_{k=300}^{315} A_k \times T_k) / (\sum_{k=300}^{315} A_k)$$

[In the formulas, $A_k$ is a weighting factor at a wavelength k (nm) for calculating T (light transmittance) specified in ISO-9050:2003, and $T_k$ is transmittance at a wavelength k (nm).]
The wavelength-selective transmissive glass article in the present invention is a glass article comprising a glass sheet and a film provided on a main surface of the glass sheet, the glass article having: light transmittance at a wavelength of 380 nm of 80% or more; light transmittance at a wavelength of 350 nm of 30% or less; and light transmittance at a wavelength of 315 nm of 10% or less.

In addition, the glass article preferably contains a component that emits light at a wavelength of 380 nm in at least one of the glass sheet and the film.

The glass sheet has light transmittance at a wavelength of 360 nm of 50% or more.

The film contains a component that absorbs light at a wavelength of 360 nm or less.

The film preferably contains a component that reflects light at a wavelength of 360 nm or less.

The wavelength-selective transmissive glass article in the present invention is preferably a laminated glass.

The present invention provides a window glass that is the wavelength-selective transmissive glass article.

The present invention provides a cover glass that is the wavelength-selective transmissive glass article.

Advantageous Effects of the Invention

In the present invention, a wavelength-selective transmissive glass article which transmits light in a specific wavelength region but scarcely transmits light at a wavelength shorter than the specific wavelength region, is obtained.

Brief Description of the Drawings

[FIG. 1] FIG. 1 is a diagram illustrating an exemplary transmission spectrum of a wavelength-selective transmissive glass article.

[FIG. 2] FIG. 2 is a diagram illustrating an exemplary transmission spectrum of a wavelength-selective transmissive glass article.

[FIG. 3] FIG. 3 is a diagram illustrating exemplary transmission spectra of a wavelength-selective transmissive glass article and a glass sheet.

[FIG. 4] FIG. 4 is a diagram illustrating exemplary transmission spectra of a wavelength-selective transmissive glass article and a glass sheet.

[FIG. 5] FIG. 5 is a diagram illustrating exemplary transmission spectra of a wavelength-selective transmissive glass article and a glass sheet.

[FIG. 6] FIG. 6 is a cross-sectional diagram illustrating an exemplary configuration of a wavelength-selective transmissive glass article.

[FIG. 7] FIG. 7 is a cross-sectional diagram illustrating an exemplary configuration of a wavelength-selective transmissive glass article.

[FIG. 8] FIG. 8 is an example of an automobile using a wavelength-selective transmissive glass article.

[FIG. 9] FIG. 9 is an example of a display device using a wavelength-selective transmissive glass article.

Description of Embodiments

In the present description, the "light transmittance at a wavelength of 380 nm" indicate a transmittance at the wavelength, and the "light transmittance $T_{more\ than\ 315\ nm\ and\ 400\ nm\ or\ less}$", the "light transmittance $T_{400-760nm}$" indicate a transmittance added with a weighting factor for each wavelength specified in ISO-9050:2003.

In addition, the "specific wavelength light-absorbing component" indicates a component that absorbs light at a wavelength of 360 nm or less, and the "specific wavelength light-reflecting component" indicates a component that reflects light at a wavelength of 360 nm or less.

The present invention is described below by referring to the drawings, but the present invention is not limited thereto.

[Transmission Spectrum of Glass Article]

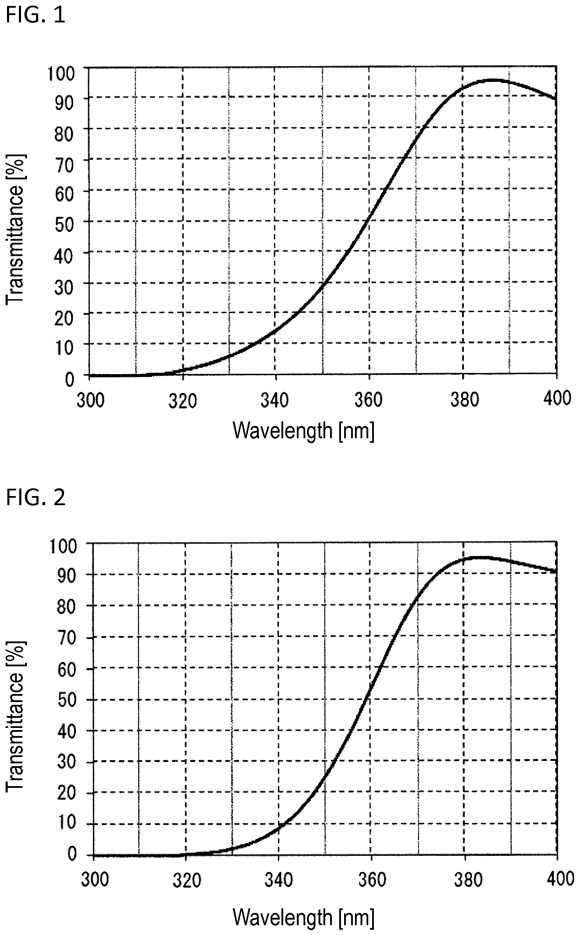

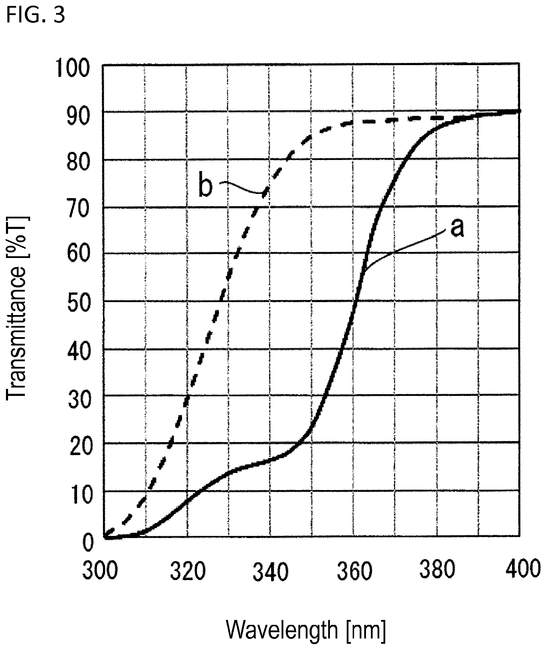

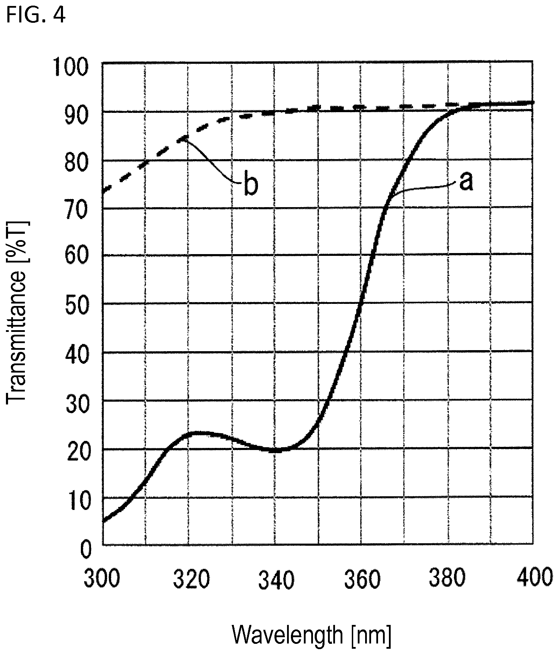

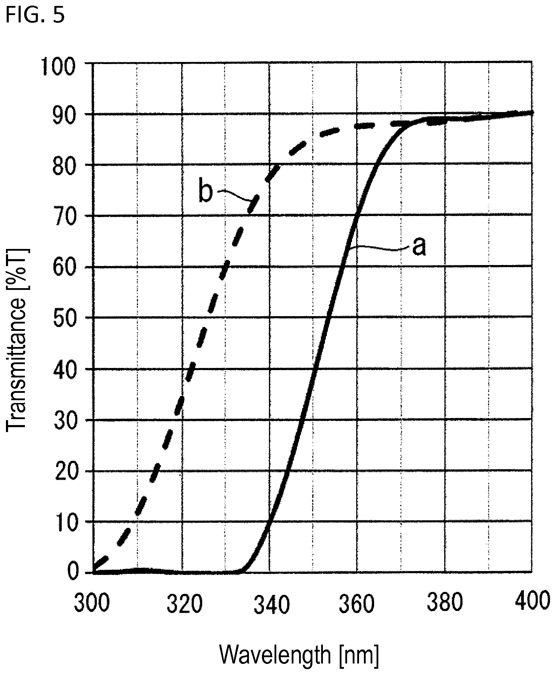

FIG. 1 is one example of the transmission spectrum of the wavelength-selective transmissive glass article in the present invention (hereinafter, sometimes referred to as "the present glass article"). Each of FIG. 2, "a" in FIG 3, "a" in FIG. 4, and "a" in FIG. 5 is another example of the transmission spectrum of the present glass article.

In the present glass article, the light transmittance $T_{more\ than\ 315\ nm\ and\ 400\ nm\ or\ less}$ at a wavelength of more than 315 nm and 400 nm or less, represented by the following formula, is 1% or more.

[Math. 3]

$$T_{\text{more than 315 nm and 400 nm or less}} = (\sum\nolimits_{k=\text{more than 315}}^{400} A_k \times T_k)/(\sum\nolimits_{k=\text{more than 315}}^{400} A_k)$$

In the formula above, Ak is a weighting factor at a wavelength k (nm) for calculating T (light transmittance) specified in ISO-9050:2003, and Tk is the transmittance at a wavelength k (nm).

Accordingly, in the formula, out of weighting factors for calculating T (light transmittance) specified in ISO-9050:2003, only weighting factors in the wavelength range of more than 315 nm and 400 nm or less are used, and the light transmittance is a value obtained by dividing the sum of the products of weighting factors (Ak) and transmittances (Tk) in the wavelength range above by the sum of weighting factors in the wavelength range above and is an average value of transmittances after weighting.

$A_k$ in ISO-9050:2003 is specified at every wavelength k of 5 nm and therefore, $A_k$ at the time of k = more than 315 nm in the sigma of the formula is dealt with as Ak at the time of k = 320 nm.

In the present glass article, the light transmittance $T_{\text{more than 315 nm and 400 nm or less}}$ is 1% or more and therefore, an anti-myopia effect is expected. The light transmittance T$_{\text{more than 315 nm and 400 nm or less}}$ in the present glass article is preferably 3% or more, more preferably 5% or more, still more preferably 10% or more, yet still more preferably 20% or more, even yet still more preferably 30% or more, more preferably 40% or more, still more preferably 60% or more, and most preferably 80% or more.

In the present glass article, the light transmittance $T_{\text{315 nm or less}}$ at a wavelength of 315 nm or less, represented by the following formula, is 60% or less.

[Math. 4]

$$T_{\text{315nm or less}} = (\sum\nolimits_{k=300}^{315} A_k \times T_k)/(\sum\nolimits_{k=300}^{315} A_k)$$

In the formula, Ak and Tk are the same as above. Accordingly, in the formula, out of weighting factors for calculating T (light transmittance) specified in ISO-9050:2003, only weighting factors in the wavelength range of 300 to 315 nm are used, and the light transmittance is a value obtained by dividing the sum of the products of weighting factors (Ak) and transmittances (Tk) in the wavelength range above by the sum of weighting factors in the wavelength range above and is an average value of transmittances after weighting.

The value of the weighting factor (Ak) specified in ISO-9050:2003 is set to 0 for the wavelengths of less than 300 nm and for this reason, only weighting factors in the wavelength range of 300 to 315 nm are used.

In the present glass article, the light transmittance $T_{\text{315 nm or less}}$ is 60% or less, so that various damages to eye due to light in the wavelength region above can be prevented. The light transmittance $T_{\text{315 nm or less}}$ in the present glass article is preferably 45% or less, more preferably 30% or less, still more preferably 15% or less, yet still more preferably 5% or less, even yet still more preferably 1% or less, and most preferably 0.8% or less.

In the present glass article, the light transmittance $T_{\text{360-400 nm}}$ at a wavelength of 360 to 400 nm, represented by the following formula, is preferably 1% or more.

[Math. 5]

$$T_{\text{360-400nm}} = (\sum\nolimits_{k=360}^{400} A_k \times T_k)/(\sum\nolimits_{k=360}^{400} A_k)$$

In the formula, Ak and Tk are the same as above. Accordingly, in the formula, out of weighting factors for calculating T (light transmittance) specified in ISO-9050:2003, only weighting factors in the wavelength range of 360 to 400 nm are used, and the light transmittance is a value obtained by dividing the sum of the products of weighting factors (Ak) and transmittances (Tk) in the wavelength range above by the sum of weighting factors in the wavelength range above and is an average value of transmittances after weighting.

In the present glass article, the light transmittance $T_{\text{360-400 nm}}$ is 1% or more, so that the anti-myopia effect is furthermore expected. Of the wavelength region of more than 315 nm and 400 nm or less, the light in the wavelength region of 360 to 400 nm is in particular expected to provide an anti-myopia effect.

The light transmittance $T_{\text{360-400 nm}}$ in the present glass article is preferably 5% or more, more preferably 10% or more, still more preferably 20% or more, yet still more preferably 30% or more, even yet still more preferably 40% or more, more preferably 60% or more, and most preferably 80% or more.

In the present glass article, the transmittance of light except for light of 400 nm or less is not particularly limited and may be appropriately selected depending on use applications. Directing attention to the light transmittance $T_{400-760\,nm}$, in the glass article of the present invention, the light transmittance $T_{400-760\,nm}$ at a wavelength of 400 to 760 nm, represented by the following formula, is preferably 1% or more.

[Math. 6]

$$T_{400-760nm} = (\sum_{k=400}^{760} A'_k \times T_k) / (\sum_{k=400}^{760} A'_k)$$

In the formula, Tk is the same as above, and A'k is a weighting factor at a wavelength k (nm) for calculating the light transmittance $T_{400-760\,nm}$ (Illuminant D65) Tv_D65 specified in ISO-9050:2003.

Accordingly, in the formula, out of weighting factors for calculating the light transmittance $T_{400-760\,nm}$ (Illuminant D65) Tv_D65 specified in ISO-9050:2003, only weighting factors in the wavelength range of 400 to 760 nm are used, and the light transmittance is a value obtained by dividing the sum of the products of weighting factors (Ak) and transmittances (Tk) in the wavelength range above by the sum of weighting factors in the wavelength range above and is an average value of transmittances after weighting.

In the present glass article, when the light transmittance $T_{400-760\,nm}$ is 1% or more, visibility from the back of glass is good and the design property is enhanced. The more preferable range of the light transmittance $T_{400-760\,nm}$ varies depending on use application of the present glass article, but in the case where it is required to transmit light at a wavelength of 400 to 760 nm, the light transmittance $T_{400-760\,nm}$ is preferably 10% or more, more preferably 20% or more, still more preferably 40% or more, yet still more preferably 60% or more, even yet still more preferably 80% or more, and most preferably 90% or more.

In the present glass article, the light transmittance at a wavelength of 380 nm is 80% or more. Such a glass article sufficiently transmits light having a high anti-myopia effect. The light transmittance at a wavelength of 380 nm is more preferably 85% or more.

In the present glass article, the light transmittance at a wavelength of 350 nm is 30% or less, more preferably 20% or less, still more preferably 10% or less. The present glass article can reduce the intensity of light at a wavelength of 350 nm or less, and therefore, when the present glass article is used for a window glass of a building construction or an automobile, sunburn or the like due to light in the wavelength region above can be prevented.

In the present glass article, the light transmittance at a wavelength of 315 nm is 5% or less, preferably 1% or less. The present glass article scarcely transmits light at a wavelength of 315 nm or less, and therefore, when the present glass article is used for a window glass of a building construction or an automobile, acute sunburn or the like due to light in the wavelength region above can be prevented.

[Exemplary Configuration of Glass Article]

The shape of the present glass article is not particularly limited. The present glass article is, for example, a glass sheet or a glass vessel.

The present glass article may be a glass article with film where a film is formed on the main surface of a glass sheet, or may be a stacked glass article where a plurality of glass sheets are stacked via a film.

In the case where the present glass article is composed of only glass, in the present glass article, the light transmittance $T_{more\ than\ 315\ nm\ and\ 400\ nm\ or\ less}$ at a wavelength of more than 315 nm and 400 nm or less, calculated as a thickness of 6 mm, is preferably 1% or more and the light transmittance $T_{315\ nm\ or\ less}$ at a wavelength of 315 nm or less, calculated as a thickness of 6 mm, is preferably 60% or less. In addition, the light transmittance $T_{360-400\,nm}$ at a wavelength of 360 to 400 nm, calculated as a thickness of 6 mm, is preferably 1% or more, and the light transmittance $T_{400-760\,nm}$ at a wavelength of 400 to 760 nm, calculated as a thickness of 6 mm, is preferably 1% or more.

In the case where the present glass article includes a glass sheet and a film provided on the main surface of the glass sheet, the light transmittance at a wavelength of 380 nm is 80% or more, the light transmittance at a wavelength of 350 nm is 30% or less, and the light transmittance at a wavelength of 315 nm is 5% or less.

In the case where the present glass article includes a glass sheet and a film, at least one of the glass sheet and the film preferably contains a component that emits light at a wavelength of 380 nm, because the anti-myopia effect increases. The light-emitting component preferably emits the light by absorbing light at a wavelength of 360 nm or less. In this case, the wavelength giving the maximum light emission is preferably 360 nm or more, more preferably from 360 to 400 nm.

<Glass Article with Film>

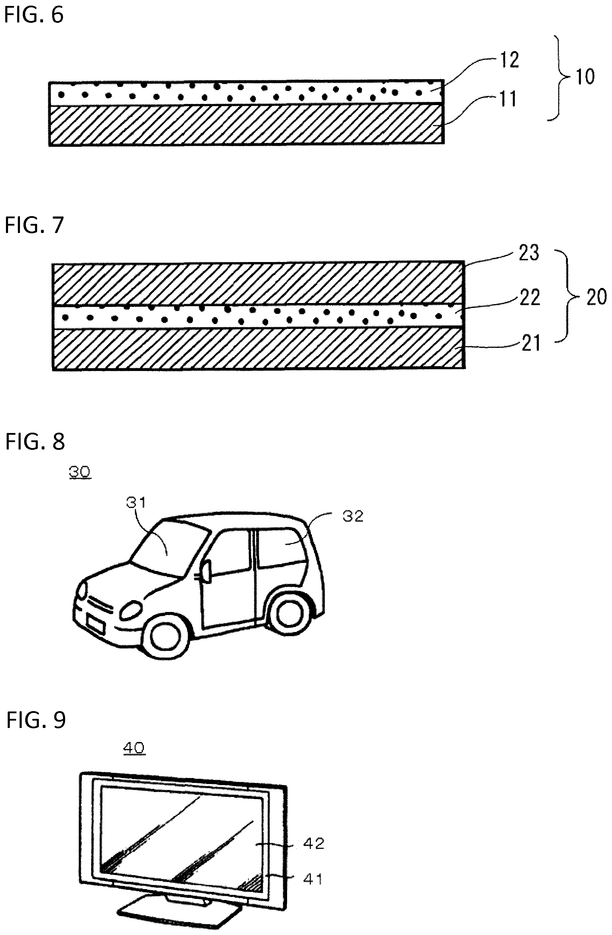

FIG. 6 is an exemplary configuration of the present glass article. FIG. 6 illustrates a glass article with film 10 in a flat plate shape, but the present glass article may be a curved glass article. The glass article with film 10 illustrated in FIG. 6 is composed of a glass sheet 11 and a film 12. The glass article is described below by taking this glass article with film 10 as an example, but the present invention is not limited thereto.

For example, the film 12 illustrated in FIG. 6 is a single film, but the film in the present glass article may be a stacked film. In addition, the glass article with film 10 illustrated in FIG. 6 has a film 12 on one surface of the glass sheet 11, but the present glass article may have a film on both surfaces. In the case where the present glass article has a film on both surfaces of the glass sheet, the film provided on one surface and the film provided on the other surface may be the same or different.

(Glass Sheet)

In the glass article with film 10, the thickness of the glass sheet 11 is not particularly limited as long as a predetermined transmittance is obtained. In the case where the present glass article with film 10 is a window glass of a building construction or an automobile, the thickness is, for example, from 2 to 10 mm. In the case where the present glass article with film 10 is a cover glass of a display or a lighting fixture, the thickness is, for example, from 0.1 to 2 mm.

The glass sheet 11 preferably transmits 50% or more of light at a wavelength of 360 nm. Such a glass sheet well transmits light having a high anti-myopia effect and is easy to handle. These points will be described below.

Usually, a glass containing no specific wavelength light-absorbing component in the glass composition transmits light at a wavelength of 400 nm or less to some extent. For example, "b" in FIG. 3 shows an exemplary transmission spectrum of a commonly used glass sheet for windows containing a small amount of $Fe_2O_3$. In addition, "b" in FIG. 4 shows an exemplary transmission spectrum of a glass sheet for displays containing substantially no specific wavelength light-absorbing component. These commonly used glass sheets transmit 50% or more of light at a wavelength of 360 nm and transmits 80% or more of light at a wavelength of 380 nm, and therefore, they are preferred as the glass sheet 11 in the present invention.

$Fe_2O_3$ contained in a commonly used window glass is a component contained as an impurity in a color modifier or a raw material but is known to function as a specific wavelength light-absorbing component. On the other hand, as an ultraviolet absorbing glass, glasses containing various specific wavelength light-absorbing components have been conventionally developed. For example, there is a glass containing $CeO_2$ or $Fe_2O_3$, as the specific wavelength light-absorbing component.

Many of these ultraviolet absorbing glasses contain a metal ion as the specific wavelength light-absorbing component. The metal ion usually exhibits relatively broad light absorption properties, and therefore, many ultraviolet absorbing glasses absorb light in a wide wavelength region. In this case, a glass having a low light transmittance at a wavelength of 360 nm also has a low light transmittance at a wavelength of 380 nm.

As the ultraviolet absorbing glass, a glass fabricated to absorb only a specific wavelength by, for example, precipitation of a fine particle in the glass is known. However, such a glass is thermally or chemically unstable and is therefore difficult to handle.

The light transmittance $T_{400\text{-}760\,nm}$ of the glass sheet 11 is not particularly limited and can be appropriately set depending on use applications of the present glass article. In the case where the present glass article is a cover glass of a display, the light transmittance $T_{400\text{-}760\,nm}$ is preferably close to 100% with no coloring. A glass sheet that does not transmit light at a wavelength of 315 nm or less is more preferred.

The glass composition of the glass sheet 11 is not particularly limited as long as a desired transmittance is obtained. As the glass composition of the glass sheet 11, for example, a soda lime glass used for a commonly used window glass, an (alkali-free) aluminoborosilicate glass used for a display substrate, and an alkali aluminosilicate glass used as a glass for chemical strengthening are preferred, because the strength and durability are excellent.

In the case of intending to more reduce the light transmittance, the glass sheet is more preferably a glass containing the above-described specific wavelength light-absorbing component.

(Film)

The film 12 contains a component that absorbs light at a wavelength of 360 nm or less (according to claim 1), or a component that reflects or scatters light at a wavelength of 360 nm or less (not according to claim 1) . In this case, the light transmittance of the present glass article is smaller than the light transmittance of the glass sheet.

The thickness of the film 12 is not particularly limited as long as a desired transmittance is obtained, but in order to obtain more preferable light transmission properties, the thickness is, for example, 1 µm or more, preferably 2 µm or more, more preferably 5 µm or more. The thickness of the film is usually 100 µm or less.

The material of the film 12 is not particularly limited and may be an organic substance such as a resin (according to claim 1) or may be an inorganic substance (not according to claim 1).

The film 12 contains a specific wavelength light-absorbing component that absorbs light at a wavelength of 360 nm or less (according to claim 1), or a specific wavelength light-reflecting component that reflects light at a wavelength of 360 nm or less (not according to claim 1). In this case, the film 12 may be, as a whole, constituted of a specific wavelength light-absorbing component (not according to claim 1) or a specific wavelength light-reflecting component (not according to claim 1), or may be a film where a specific wavelength light-absorbing component (according to claim 1) or a specific wavelength light-reflecting component (not according to claim 1) is dispersed or dissolved in a matrix. The specific wavelength light-reflecting component (not according to claim 1) sometimes acts as a component that scatters light at a wavelength of 360 nm or less (hereinafter, sometimes referred to as a specific wavelength light-reflecting component).

In the case where the film 12 contains a specific wavelength light-reflecting component (not according to claim 1), in view of stability of optical properties, the surface of the film is preferably constituted of a specific wavelength light-reflecting component. In addition, the specific wavelength light-reflecting component is preferably arranged to appropriately scatter light at a wavelength of 360 nm or less.

In the case where the film 12 is constituted of a specific wavelength light-reflecting component (not according to claim 1), the film 12 is preferably constituted of a dielectric stacked film. The stacked film can have reflection properties for light at a wavelength of 360 nm or less (specific wavelength light) by appropriately designing, for example, the number of layers constituting the stacked film, or the materials and arrangement order of respective layers.

For example (not according to claim 1), it is preferred that the stacked film is constructed by sequentially laminating, from the side closer to the first surface of the transparent substrate, a first layer, a second layer, a third layer, and a fourth layer and has a configuration where a "high refractive index layer" having a high refractive index and a "low refractive index layer" having a low refractive index are alternately stacked.

In other words, the first layer and third layer preferably have a larger refractive index than that of the second layer and fourth layer. In this case, the refractive index of the first layer and third layer is preferably 2.0 or more, more preferably 2.1 or more. As the material constituting such a "high refractive index layer", examples thereof include, for example, titania, niobium oxide, zirconia, ceria, tantalum oxide and the like.

The thickness of the first layer is preferably from 5 to 20 nm, and the thickness of the third layer is preferably from 45 to 125 nm. The third layer may be constituted of the same material as the first layer.

The refractive index of the second layer and fourth layer is preferably from 1.4 to 1.8. As the material constituting such a "low refractive index layer", examples thereof include, for example, silica, alumina and the like. Silica may be doped with other element such as aluminum. The thickness of the second layer is preferably from 15 to 45 nm, and the thickness of the fourth layer is preferably from 0 to 110 nm.

In addition, a fifth layer, a sixth layer, ... an n-th layer (n is an integer of 5 or more) may be present.

The layer just below the outermost layer need not necessarily be a low refractive index layer, and the layer just below the outermost layer may be a high refractive index layer.

Each of the layers constituting the stacked film may be provided by any method. Each layer may be deposited, for example, by a vapor deposition method, a sputtering method, or a CVD (chemical vapor deposition) method.

In the case of a configuration where the film 12 contains a specific wavelength light-absorbing component in the matrix (according to the invention), the specific wavelength light-absorbing component is preferably uniformly dissolved or is dispersed as a particle small enough not to scatter light. In such a case, the haze value decreases. The haze value of the film is preferably 20% or less, more preferably 10% or less, still more preferably 1% or less.

The matrix component of the film 12 is a matrix that transmits light at a wavelength of more than 315 nm and 400 nm or less, and examples thereof include an inorganic matrix such as silicon dioxide, an organic matrix such as epoxy resin, acrylic resin, polycarbonate resin and melamine resin, and an organic-inorganic matrix in which an organic compound and an inorganic compound are combined.

The organic matrix is preferably a fluororesin, because it transmits light at a wavelength of more than 315 nm and 400 nm or less. The matrix component is preferably a compound not having absorption at a wavelength in the visible region (from 400 to 760 nm, hereinafter the same), but in the case where coloring is permitted, the component may have absorption at a wavelength in the visible region.

In the case where the film 12 contains a specific wavelength light-absorbing component, the specific wavelength light-absorbing component is preferably a component that absorbs light at a wavelength of 315 nm or less. The specific wavelength light-absorbing component may be powder or liquid. When the film 12 contains such a component, a glass article capable of blocking light in a harmful wavelength region is obtained even when a commonly used window glass or a glass for display substrates is used as the glass sheet 11.

As the specific wavelength light-absorbing component, examples thereof include, for example, a so-called ultraviolet absorber containing one or more members selected from a benzotriazole-based compound (not according to claim 1), a triazine-based compound, a benzophenone-based compound (not according to claim 1), a malonic acid ester-based compound, and an oxalic acid anilide-based compound (not according to claim 1).

Examples of the benzotriazole-based compound include, for example, 2-[5-chloro(2H)-benzotriazol-2-yl]-4-methyl-6-(tert-butyl)phenol, octyl-3-[3-tert-4-hydroxy-5-[5-chloro-2H-benzotriazol-2-yl]propionate, 2-(2H-benzotriazol-2-yl)-4,6-di-tert-pentylphenol, 2-(2-hydroxy-5-methylphenyl)benzotriazole, 2-[2-hydroxy-3-(3,4,5,6-tetrahydrophthalimido-methyl)-5-methylphenyl]benzotriazole, 2-(2-hydroxy-5-tert-octylphenyl)benzotriazole, 2-(2-hydroxy-5-tert-butylphenyl)-2H-benzotriazole, methyl 3-(3-(2H-benzotriazol-2-yl)-5-tert-butyl-4-hydroxyphenyl)propionate, 2-(2H-benzothiazol-2-yl)-4,6-bis(1-methyl-1-phenylethyl)phenol, and 2-(2H-benzotriazol-2-yl)-6-(1-methyl-1-phenylethyl)-4-(1,1,3,3-tretramethylbutyl)phenol.

Examples of the triazine-based compound include, for example, 2-[4-[(2-hydroxy-3-dodecyloxypropyl)oxy]-2-hydroxyphenyl]-4,6-bis(2,4-dimethylphenyl) -1,3,5-triazine, 2-[4-[(2-hydroxy-3-(2'-ethyl)hexyl)oxy]-2-hydroxyphenyl]-4,6-bis(2,4-dimethylphenyl)-1, 3,5-triazine, 2,4-bis(2-hydroxy-4-butoxyphenyl)-6-(2,4-bis-butoxyphenyl)-1,3,5-triazine, and 2-(2-hydroxy-4-[1-octylcarbonylethoxy]phenyl)-4,6-bis(4-phenylphenyl)-1,3,5-triazine.

Examples of the benzophenone-based compound include, for example, 2,4-dihydroxybenzophenone, 2,2',3-trihydroxybenzophenone, 2,2',4,4'-tetrahydroxybenzophenone, 2,4-dihydroxy-2',4'-dimethoxybenzophenone, and 2-hydroxy-4-n-octoxybenzophenone.

Examples of the malonic acid ester-based compound include, for example, [(4-methoxyphenyl)-methylene]-propanedioic acid dimethyl ester.

Examples of the oxalic acid anilide-based compound include, for example, N-(2-ethoxyphenyl)-N'-(2-ethoxyphenyl)-ethanediamine and N-(4-dodecylphenyl)-N'-(2-ethoxyphenyl)-ethanediamine.

In the present invention, one of these specific wavelength light-absorbing components may be used alone, or two or more thereof may be used in combination.

<Stacked Glass Article>

FIG. 7 is an exemplary configuration when the present glass article is a stacked glass. FIG. 7 illustrates a stacked glass article 20 in a flat plate shape, but the present glass article may be a curved glass article. The stacked glass article 20 illustrated in FIG. 7 is constituted of glass sheets 21 and 23 and a film 22 provided therebetween. The glass article is described below by taking this stacked glass article 20 as an example, but the present invention is not limited thereto.

For example, the stacked glass article 20 illustrated in FIG. 7 consists of three layers of glass-film-glass, but the present glass article may be a laminate of four or more layers.

The film in the stacked glass article may be, as a whole, constituted of a specific wavelength light-absorbing component (not according to claim 1) or a specific wavelength light-reflecting component (not according to claim 1), or may be a film where a specific wavelength light-absorbing component (according to to claim 1) or a specific wavelength light-reflecting component (not according to claim 1) is dispersed or dissolved in a matrix. In the latter case, the matrix is preferably a compound that transmits light at a wavelength of more than 315 nm and 400 nm or less. The matrix is preferably a compound not having absorption at a wavelength in the visible region, but in the case where coloring is permitted, the matrix may have absorption at a wavelength in the visible region.

Examples of the matrix include, for example, an inorganic matrix such as silicon dioxide, an organic matrix such as fluororesin, epoxy resin, acrylic resin, polycarbonate resin and melamine resin, and an organic-inorganic matrix in which an organic compound and an inorganic compound are combined.

As the organic matrix, a fluororesin is preferred, because it transmits light at a wavelength of more than 315 nm and 400 nm or less.

In the case where the present glass article is a stacked glass article, the present glass article may be a laminated glass. In the laminated glass, two or more glass sheets are bonded with an intermediate film (resin film), thereby being integrated together. The laminated glass is used for a window glass of an automobile and in addition, used as a safety glass or security glass. As the intermediate film of the laminated glass, polyvinylbutyral is widely used.

In the case where the present glass article is a laminated glass, a specific wavelength light-absorbing component (according to claim 1) or a specific wavelength light-reflecting component (not according to claim 1) may be dispersed in the intermediate film, or in addition to the intermediate film, a thin film containing a specific wavelength light-absorbing component or a specific wavelength light-reflecting component may be provided.

The film preferably transmits light at a wavelength of more than 315 nm and 400 nm or less and, for example, an inorganic matrix such as silicon dioxide, an organic matrix such as fluororesin, epoxy resin, acrylic resin, polycarbonate resin and melamine resin, or an organic-inorganic matrix in which an organic compound and an inorganic compound are combined, may be used.

The organic matrix is preferably a fluororesin, because it transmits light at a wavelength of more than 315 nm and 400 nm or less. The matrix is preferably a compound not having absorption at a wavelength in the visible region, but in the case where coloring is permitted, the matrix may have absorption at a wavelength in the visible region.

[Manufacturing Method of Glass Article]

The present glass article can be manufactured in accordance with commonly used manufacturing method for a glass with film or stacked glass.

In the case where the present glass article is a glass article with film, the article can be manufactured, for example, by a method by coating a glass sheet with a film.

Here, examples of the coating method include, for example, a sputtering method and a vapor deposition method, where a coating substance is vaporized and deposited on a base material by using a vacuum apparatus; a chemical vapor deposition method (CVD method) where a coating substance is chemically vaporized and deposited on a base material; and a wet coating method where a coating substance is dissolved or dispersed in a solvent to prepare a solution and the solution is applied onto a base material.

In the case where the present glass article is a stacked glass article, a glass sheet and a film may be separately prepared and then stacked, or after a film is formed on a glass sheet, another glass sheet may be stacked thereon. It may also be possible to stack a plurality of glass sheets and films and form another film on the glass sheet of the outermost layer.

[Use Example of Glass Article]

FIG. 8 and FIG. 9 illustrate use examples of the present glass article, but the present invention is not limited thereto.

The present glass article can be used, for example, as a window glass of a building construction such as house and building, or as a window glass of a vehicle such as automobile. For example, in the automobile 30 illustrated in FIG. 8, the present glass article may be used for the window glass 31 on the driver's seat side, may be used for the window glass 32 on the side surface, or may be used for the window glass in the rear part (not shown).

In the case of using the present glass article as a window glass, the article can be used by attaching it to a window frame or the like by the same method as that for a normal glass sheet.

The present glass article can be used for a display device or a lighting fixture. For example, in a liquid crystal display device 40 illustrated in FIG. 9, the present glass article may be used as a front panel 41 or may be used as a cover glass 42.

In the case of using the present glass article for, e.g., a cover glass of a display device or a lighting fixture, the light source incorporated into the device preferably emits light at a wavelength of around 380 nm. By allowing the light emitted from such a light source to reach the human eye via the present glass article, the anti-myopia effect is increased.

The present glass article may also be used for interior decoration such as wall and mirror. By using the present article for window or interior decoration, the amount of light having an anti-myopia effect indoors can be increased.

Examples

The present invention is described in detail below by referring to Examples, but the present invention is not limited by the following description.

[Case 1] (not according to claim 1)

A stacked film consisting of 4 layers in total, i.e., first to fourth layers, was formed on a 2 mm-thick alkali aluminosilicate glass sheet (manufactured by Asahi Glass Company, Limited, trade name: Dragontrail) by a sputtering method. This stacked film is composed of specific wavelength light-reflecting components.

The stacked film was configured to have the following layers from the side close to the glass sheet:

First layer: $Nb_2O_5$ layer, thickness: 29.0 nm,
Second layer: $SiO_2$ layer, thickness: 22.3 nm,
Third layer: $Nb_2O_5$ layer, thickness: 102.1 nm, and
Fourth layer: $SiO_2$ layer, thickness: 96.1 nm.

The first and third layers were deposited by a sputtering method in an atmosphere of Ar and $O_2$ (oxygen: 8 vol%) by using an $NbO_x$ target ($x < 2$) as the target. The sputtering pressure was set at 0.37 Pa.

The second and fourth layers were deposited by a sputtering method in an atmosphere of Ar and $O_2$ (oxygen: 60 vol%) by using an Si target as the target. The sputtering pressure was set at 0.17 Pa.

Subsequently, $Nb_2O_5$ and $SiO_2$ films were formed also on the back side to obtain a glass article with film. The obtained glass article was measured for the spectral transmittance in conformity with JIS R3106-1998. FIG. 1 illustrates a transmission spectrum at a wavelength of 300 to 400 nm.

In addition, the light transmittance $T_{more\ than\ 315\ nm\ and\ 400\ nm}$ or less at a wavelength of more than 315 nm and 400 nm or less, the light transmittance $T_{315\ nm\ or\ less}$ at a wavelength of 315 nm or less, the light transmittance $T_{360-400\ nm}$ at a wavelength of 360 to 400 nm, the light transmittance $T_{400-760\ nm}$ at a wavelength of 400 to 760 nm, the light transmittance $T_{380\ nm}$ at a wavelength of 380 nm, the light transmittance $T_{350\ nm}$ at a wavelength of 350 nm, and the light transmittance $T_{315\ nm}$ at a wavelength of 315 nm are shown together in Table 1. Furthermore, the light transmittance at a wavelength of 360 nm of the glass sheet is shown in Table 1.

[Case 2] (not according to claim 1)

A stacked film consisting of 8 layers in total, i.e., first to eighth layers, was formed on a 2 mm-thick alkali aluminosilicate glass sheet (manufactured by Asahi Glass Company, Limited, trade name: Dragontrail) by a sputtering method in the same manner as in Case 1. This stacked film is composed of specific wavelength light-reflecting components.

The stacked film was configured to have the following layers from the side close to the glass sheet:

First layer: $Nb_2O_5$ layer, thickness: 0.6 nm,
Second layer: $SiO_2$ layer, thickness: 87.2 nm,
Third layer: $Nb_2O_5$ layer, thickness: 13.8 nm,
Fourth layer: $SiO_2$ layer, thickness: 45.6 nm,
Fifth layer: $Nb_2O_5$ layer, thickness: 34.1 nm,
Sixth layer: $SiO_2$ layer, thickness: 23.4 nm,
Seventh layer: $Nb_2O_5$ layer, thickness: 31.0 nm, and
Eighth layer: $SiO_2$ layer, thickness: 98.1 nm.

Subsequently, $Nb_2O_5$ and $SiO_2$ films were formed also on the back side to obtain a glass article with film. The stacked film on the back side is configured to have the following layers from the side close to the glass sheet:

First layer: $Nb_2O_5$ layer, thickness: 6.6 nm,
Second layer: $SiO_2$ layer, thickness: 79.0 nm,
Third layer: $Nb_2O_5$ layer, thickness: 20.0 nm,
Fourth layer: $SiO_2$ layer, thickness: 38.6 nm,
Fifth layer: $Nb_2O_5$ layer, thickness: 39.1 nm,
Sixth layer: $SiO_2$ layer, thickness: 20.4 nm,
Seventh layer: $Nb_2O_5$ layer, thickness: 35.0 nm, and
Eighth layer: $SiO_2$ layer, thickness: 101.0 nm.

FIG. 2 illustrates a transmission spectrum at a wavelength of 300 to 400 nm of the glass article in which a stacked film has been formed on both sides. In addition, the transmittances are shown in Table 1 in the same manner as in Case 1.

[Case 3] (according to claim 1)

A coat solution was obtained by mixing 50 g of an alcohol solvent (produced by Japan Alcohol Trading Co., Ltd., trade name: Solmix AP-1), 12 g of tetramethoxysilane, 3.8 g of 3-glycidoxypropyltrimethoxysilane, 10 g of 2-[4-[(2-hydroxy-3-(2'-ethyl)hexyl)oxy]-2-hydroxyphenyl]-4,6-bis(2,4-dimethylphenyl)-1,3,5-triazine, 11 g of acetic acid, and 11 g of ion-exchanged water.

This coat solution contains 2-[4-[(2-hydroxy-3-(2'-ethyl)hexyl)oxy]-2-hydroxyphenyl]-4,6-bis(2,4-dimethylphenyl)-1,3,5-triazine as a specific wavelength light-absorbing component and contains tetramethoxysilane and 3-glycidoxypropyltrimethoxysilane as matrix components.

The coat solution above was applied onto a 2 mm-thick soda lime glass sheet (manufactured by Asahi Glass Company, Limited, trade name: transparent float plate glass) by means of an applicator and dried at 150°C for 30 minutes to obtain a glass article with film. The transmission spectrum thereof is illustrated in "a" in FIG. 3. In addition, the transmittances are shown in Table 1 in the same manner as in Case 1. The dashed line "b" in FIG. 3 is the transmission spectrum of a 2 mm-thick soda lime glass sheet on which the above-described film is not formed (Reference Example).

[Case 4] (according to claim 1)

A glass article with film was obtained in the same manner as in Case 3 except that a 0.5 mm-thick alkali aluminosilicate glass sheet (manufactured by Asahi Glass Company, Limited, trade name: Dragontrail) was used. The transmission spectrum thereof is illustrated in "a" in FIG. 4. In addition, the transmittances are shown in Table 1 in the same manner as in Case 1. The dashed line "b" in FIG. 4 is the transmission spectrum of a 0.5 mm-thick alkali aluminosilicate glass sheet on which the above-described film is not formed (Reference Example).

[Case 5] (according to claim 1)

A coat solution was obtained by mixing 54.6 g of butyl acetate (produced by Junsei Chemical Co., Ltd.) and, as matrix components, 45.4 g of silicon·acrylic resin solution and 0.02 g of [(4-methoxyphenyl)-methylene]-propanedioic acid dimethyl ester.

This coat solution contains [(4-methoxyphenyl)-methylene]-propanedioic acid dimethyl ester (produced by Clariant Japan K.K., trade name: PR25) as a specific wavelength light-absorbing component and contains a silicon·acrylic resin (produced by DIC Corporation, BZ-1160) as a matrix component.

The coat solution above was applied onto a 2 mm-thick soda lime glass sheet (manufactured by Asahi Glass Company, Limited, trade name: transparent float plate glass) by means of an applicator and dried at 100°C for 30 minutes to obtain a 6 $\mu$m glass article with film.

The transmission spectrum thereof is illustrated in "a" in FIG. 5. In addition, the transmittances are shown in Table 1 in the same manner as in Case 1. The dashed line "b" in FIG. 5 is the transmission spectrum of a 2 mm-thick soda lime glass sheet on which the above-described film is not formed (Reference Example).

Table 1

|  | Case 1 | Case 2 | Case 3 | Case 4 | Case 5 |
|---|---|---|---|---|---|
| $T_{more}$ than 315 nm and 400 nm or less | 64.3% | 64.7% | 63.0% | 65.7% | 63.3% |
| $T_{315}$ nm or less | 0.3% | 0.0% | 3.3% | 17.4% | 0.0% |
| $T_{more}$ than 360 nm and 400 nm or less | 84.3% | 86.7% | 82.1% | 83.9% | 86.6% |
| $T_{400-760}$ nm | 96.5% | 99.2% | 90.8% | 91.6% | 90.6% |
| $T_{380}$ nm | 92.9% | 94.6% | 86.6% | 89.0% | 89.0% |
| $T_{350}$ nm | 29.0% | 25.2% | 23.8% | 25.4% | 38.8% |
| $T_{315}$ nm | 0.5% | 0.0% | 4.4% | 20.0% | 0.4% |
| $T_{360 \, nm}$ of glass sheet | 90.6% | 90.6% | 87.9% | 90.7% | 87.9% |

As shown in Table 1 and FIG. 3 to FIG. 5, in the glass articles of Cases 1 to 5 which are Examples, the light transmittance $T_{more \, than \, 315 \, nm \, and \, 400 \, nm \, or \, less}$ at a wavelength of more than 315 nm and 400 nm or less is 1% or more, and the light transmittance $T315_{nm \, or \, less}$ at a wavelength of 315 nm or less is 60% or less, and wavelength-selective transmittivity was exhibited.

This application is based on Japanese Patent Application No. 2015-235807 filed on December 2, 2015.

Industrial Applicability

The wavelength-selective transmissive glass article in the present invention can be utilized, for example, as a window glass, an interior glass such as wall surface, a cover glass of a lighting fixture, and a cover glass of a display device.

Description of Reference Numerals and Signs

10      Glass article with film
20      Stacked glass article
11,21,23  Glass sheet
12,22  Film

| 30 | Automobile |
|----|-----------|
| 31 | Window glass on driver's seat side |
| 32 | Window glass on side surface |
| 40 | Liquid crystal display device |
| 41 | Front panel |
| 42 | Cover glass |

**Claims**

1. A wavelength-selective transmissive glass article,

which has light transmittance $T_{\text{more than 315 nm and 400 nm or less}}$ at a wavelength of more than 315 nm and 400 nm or less, represented by the following formula, of 1% or more and light transmittance $T_{\text{315 nm or less}}$ at a wavelength of 315 nm or less, represented by the following formula, of 60% or less:

[Math. 1]

$$T_{\text{more than 315 nm and 400 nm or less}} = \left(\sum\nolimits_{k=\text{more than 315}}^{400} A_k \times T_k\right) / \left(\sum\nolimits_{k=\text{more than 315}}^{400} A_k\right)$$

[Math. 2]

$$T_{\text{315 nm or less}} = \left(\sum\nolimits_{k=300}^{315} A_k \times T_k\right) / \left(\sum\nolimits_{k=300}^{315} A_k\right)$$

wherein $A_k$ is a weighting factor at a wavelength k (nm) for calculating T (light transmittance) specified in ISO-9050:2003, and $T_k$ is transmittance at a wavelength k (nm), and
which is a glass article comprising a glass sheet and a film provided on a main surface of the glass sheet, the glass article having:

light transmittance at a wavelength of 380 nm of 80% or more;
light transmittance at a wavelength of 350 nm of 30% or less; and
light transmittance at a wavelength of 315 nm of 5% or less,

wherein the glass sheet has light transmittance at a wavelength of 360 nm of 50% or more, and
wherein the film contains a matrix that transmits light at a wavelength of more than 315 nm and 400 nm or less, and the film further contains a component that absorbs light at a wavelength of 360 nm or less in the matrix selected from a triazine-based compound and a malonic acid ester-based compound,
wherein the matrix is an inorganic matrix, an organic matrix or an organic-inorganic matrix in which an organic compound and an inorganic compound are combined.

2. The wavelength-selective transmissive glass article according to claim 1, wherein the glass article contains a component that emits light at a wavelength of 380 nm in at least one of the glass sheet and the film.

3. The wavelength-selective transmissive glass article according to claim 1 or 2, wherein the film contains a component that reflects light at a wavelength of 360 nm or less.

4. The wavelength-selective transmissive glass article according to any one of claims 1 to 3, wherein the glass article is a laminated glass.

5. A window glass that is the wavelength-selective transmissive glass article according to any one of claims 1 to 4.

6. A cover glass that is the wavelength-selective transmissive glass article according to any one of claims 1 to 4.

**Patentansprüche**

1. Wellenlängenselektiver durchlässiger Glasartikel, der eine Lichtdurchlässigkeit $T_{\text{mehr als 315}}$ nm und $_{400}$ nm oder weniger bei einer Wellenlänge von mehr als 315 nm und 400 nm oder weniger, dargestellt durch die nachstehende Formel, von 1 % oder mehr und eine Lichtdurchlässigkeit $T_{315}$ nm oder weniger bei einer Wellenlänge von 315 nm oder weniger, dargestellt durch die nachstehende Formel, von 60 % oder weniger aufweist:

[Math. 1]

$$T_{\text{mehr als 315 nm und 400 nm oder weniger}} = \left( \sum\nolimits_{k=\text{mehr als 315}}^{400} A_k \times T_k \right) \bigg/ \left( \sum\nolimits_{k=\text{mehr als 315}}^{400} A_k \right)$$

[Math. 2]

$$T_{315 \text{ nm oder weniger}} = \left( \sum\nolimits_{k=300}^{315} A_k \times T_k \right) \bigg/ \left( \sum\nolimits_{k=300}^{315} A_k \right)$$

wobei $A_k$ ein Gewichtungsfaktor bei einer Wellenlänge k (nm) zur Berechnung von T (Lichtdurchlässigkeit) ist, der in ISO-9050:2003 spezifiziert ist, und $T_k$ die Durchlässigkeit bei einer Wellenlänge k (nm) ist, und

wobei es sich um einen Glasartikel handelt, der eine Glasscheibe und einen auf einer Hauptoberfläche der Glasscheibe vorgesehenen Film umfasst,
wobei der Glasartikel aufweist:

eine Lichtdurchlässigkeit bei einer Wellenlänge von 380 nm von 80 % oder mehr;
eine Lichtdurchlässigkeit bei einer Wellenlänge von 350 nm von 30 % oder weniger; und
eine Lichtdurchlässigkeit bei einer Wellenlänge von 315 nm von 5 % oder weniger,

wobei die Glasscheibe eine Lichtdurchlässigkeit bei einer Wellenlänge von 360 nm von 50 % oder mehr aufweist, und
wobei der Film eine Matrix enthält, die Licht bei einer Wellenlänge von mehr als 315 nm und 400 nm oder weniger durchlässt, und
der Film weiterhin einen Bestandteil in der Matrix enthält, der Licht bei einer Wellenlänge von 360 nm oder weniger absorbiert, ausgewählt aus einer Verbindung auf Triazinbasis und einer Verbindung auf Malonsäureesterbasis,
wobei die Matrix eine anorganische Matrix, eine organische Matrix oder eine organisch-anorganische Matrix, in der eine organische Verbindung und eine anorganische Verbindung kombiniert sind, ist.

2. Wellenlängenselektiver durchlässiger Glasartikel nach Anspruch 1, wobei der Glasartikel einen Bestandteil in zumindest einem der Glasscheibe und des Films enthält, der Licht bei einer Wellenlänge von 380 nm emittiert.

3. Wellenlängenselektiver durchlässiger Glasartikel nach Anspruch 1 oder 2, wobei der Film einen Bestandteil enthält, der Licht mit einer Wellenlänge von 360 nm oder weniger reflektiert.

4. Wellenlängenselektiver durchlässiger Glasartikel nach einem der Ansprüche 1 bis 3, wobei der Glasartikel ein laminiertes Glas ist.

5. Fensterglas, das der wellenlängenselektive durchlässige Glasartikel nach einem der Ansprüche 1 bis 4 ist.

6. Deckglas, das der wellenlängenselektive durchlässige Glasartikel nach einem der Ansprüche 1 bis 4 ist.

**Revendications**

1. Article en verre transmissif sélectif en longueur d'onde,

qui a une transmittance de lumière $T_{plus\ de\ 315\ nm}$ et $_{400\ nm}$ ou moins à une longueur d'onde de plus de 315 nm et de 400 nm ou moins, représentée par la formule suivante, de 1 % ou plus et une transmittance de lumière $T_{315\ nm\ ou\ moins}$ à une longueur d'onde de 315 nm ou moins, représentée par la formule suivante, de 60 % ou moins :

[Math. 1]

$$T_{plus\ de\ 315\ nm\ et\ 400\ nm\ ou\ moins} = (\sum_{k\ =\ plus\ de\ 315}^{400} A_k \times T_k)/(\sum_{k\ =\ plus\ de\ 315}^{400} A_k)$$

[Math. 2]

$$T_{315\ nm\ ou\ moins} = (\sum_{k\ =\ 300}^{315} A_k \times T_k)/(\sum_{k\ =\ 300}^{315} A_k)$$

dans lequel $A_k$ est un facteur de pondération à une longueur d'onde k (nm) pour calculer T (transmittance de lumière) spécifié dans ISO-9050:2003, et $T_k$ est la transmittance à une longueur d'onde k (nm), et
qui est un article en verre comprenant une feuille de verre et un film disposé sur une surface principale de la feuille de verre,
l'article en verre ayant :

une transmittance de lumière à une longueur d'onde de 380 nm de 80% ou plus ;
une transmittance de lumière à une longueur d'onde de 350 nm de 30% ou moins ; et
une transmittance de lumière à une longueur d'onde de 315 nm de 5 % ou moins,

dans lequel la feuille de verre a une transmittance de lumière à une longueur d'onde de 360 nm de 50 % ou plus, et
dans lequel le film contient une matrice qui transmet de la lumière à une longueur d'onde de plus de 315 nm et de 400 nm ou moins, et
le film contient en outre un composant qui absorbe de la lumière à une longueur d'onde de 360 nm ou moins dans la matrice sélectionné parmi un composé à base de triazine et un composé à base d'ester d'acide malonique,
dans lequel la matrice est une matrice inorganique, une matrice organique ou une matrice organique-inorganique dans laquelle un composé organique et un composé inorganique sont combinés.

2. Article en verre transmissif sélectif en longueur d'onde selon la revendication 1, dans lequel l'article en verre contient un composant qui émet de la lumière à une longueur d'onde de 380 nm dans au moins un de la feuille de verre et du film.

3. Article en verre transmissif sélectif en longueur d'onde selon la revendication 1 ou 2, dans lequel le film contient un composant qui réfléchit de la lumière à une longueur d'onde de 360 nm ou moins.

4. Article en verre transmissif sélectif en longueur d'onde selon l'une quelconque des revendications 1 à 3, dans lequel l'article en verre est un verre feuilleté.

5. Verre à vitre qui est l'article en verre transmissif sélectif en longueur d'onde selon l'une quelconque des revendications 1 à 4.

6. Verre de protection qui est l'article en verre transmissif sélectif en longueur d'onde selon l'une quelconque des revendications 1 à 4.

FIG. 1

FIG. 2

FIG. 3

FIG. 4

FIG. 5

FIG. 6

FIG. 7

FIG. 8

30

FIG. 9

40

## REFERENCES CITED IN THE DESCRIPTION

**Patent documents cited in the description**

- US 2014226208 A1
- US 2014227500 A1
- JP H0234541 A
- JP 2002003243 A
- JP 2009187882 A
- JP 2015235807 A